(19) Europäisches Patentamt
European Patent Office
Office européen des brevets

(11) Numéro de publication : 0 322 278 B1

(12) # FASCICULE DE BREVET EUROPEEN

(45) Date de publication du fascicule du brevet.: **20.02.91 Bulletin 91/08**

(51) Int. Cl.$^5$ : **C08F 2/44**, F42B 5/24

(21) Numéro de dépôt : **88403170.9**

(22) Date de dépôt : **14.12.88**

(54) **Matériaux composites à pouvoir lubrifiant leur procédé de fabrication et éléments anti-érosifs pour système d'arme à tube constitués à partir de ces matériaux.**

(30) Priorité : **18.12.87 FR 8717670**

(43) Date de publication de la demande : **28.06.89 Bulletin 89/26**

(45) Mention de la délivrance du brevet : **20.02.91 Bulletin 91/08**

(84) Etats contractants désignés : **BE CH DE FR GB IT LI SE**

(56) Documents cités :
**US-A- 2 317 138**
**US-A- 4 246 159**

(73) Titulaire : **SOCIETE NATIONALE DES POUDRES ET EXPLOSIFS**
**12, quai Henri IV**
**F-75181 Paris Cédex 04 (FR)**

(72) Inventeur : **Lefumeux, Alain**
**4 Avenue des Platanes**
**F-91400 Orsay (FR)**
Inventeur : **Raynal, Serge**
**Orée de Sénart Bâtiment Hérédia**
**F-91210 Draveil (FR)**

(74) Mandataire : **Pech, Bernard et al**
**SNPE - Service Propriété Industrielle 12, Quai Henri IV**
**F-75181 Paris Cédex 04 (FR)**

EP 0 322 278 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention se rapporte au domaine des matériaux composites à pouvoir lubrifiant utilisés comme éléments anti-érosifs dans les munitions pour systèmes d'arme à tube.

Plus précisément l'invention concerne un nouveau type de matériau composite à pouvoir lubrifiant, son procédé de fabrication et son application à la réalisation d'éléments anti-érosifs destinés à équiper les munitions pour systèmes d'arme à tube.

Le problème de la lutte contre l'érosion des tubes des systèmes d'arme est un problème qui revêt une importance de plus en plus grande avec le développement des systèmes d'arme à grande cadence de tir.

L'érosion des tubes a une double cause : une cause mécanique par le frottement du projectile contre la surface intérieure du tube et une cause chimique par la corrosion chimique de la surface intérieure du tube provoquée par les gaz chauds générés par la combustion du chargement propulsif.

On remédie assez à l'érosion mécanique en équipant le projectile avec une ceinture externe en matériau mou et ductile comme le cuivre qui limite l'abrasion de la surface intérieure du tube. Cette solution est par exemple décrit dans le brevet français 2 036 458.

Par contre la lutte contre la corrosion occasionnée par les gaz chauds se révèle plus délicate.

De manière générale, en vue de diminuer cette corrosion, on cherche à interposer dans la munition, entre le chargement propulsif et la base du projectile un corps à pouvoir lubrifiant qui va être entrainé par les gaz chauds pour se déposer sur la surface intérieure du tube de manière à constituer un écran protecteur tant au plan chimique qu'au plan thermique.

Un premier type de corps à pouvoir lubrifiant utilisé à cette fin est constitué par des mélanges de cires et de charges minérales comme le talc, les oxydes de titane ou de tungstène. Ce type de solution qui est par exemple décrit dans la demande de brevet européen 0 235 533 présente un inconvénient majeur : lorsque les munitions sont conservées à la chaleur, les cires ont tendance à fondre ce qui entraine ensuite un mauvais fonctionnement de la munition au moment du tir.

Un deuxième type de corps à pouvoir lubrifiant utilisé à cette fin est constitué par des feuilles ou poches en matière synthétique remplies par un liquide lubrifiant. Le brevet US 4 334 477 décrit ainsi une munition dans laquelle le chargement propulsif est entouré par une feuille de polyacrylonitrile ayant absorbé un mélange eau-glycol. Le brevet US 4 282 813 décrit lui une munition dans laquelle on a interposé entre le chargement et la base du projectile une huile silicone encapsulée dans un film polyester. Si ce deuxième type de solution ne présente plus l'inconvénient d'être sensible à la chaleur, il présente par contre l'inconvénient de ne pas offrir, au moment du tir, une libération contrôlée et régulière dans toutes les directions du liquide lubrifiant.

Le problème de la lutte contre la corrosion chimique par les gaz chauds dans les systèmes d'arme à tube n'est donc pas résolu de manière pleinement satisfaisante à l'heure actuelle.

Le but de la présente invention est précisément de proposer une solution qui réponde de manière pleinement satisfaisante à ce problème.

L'objet de l'invention concerne donc un matériau composite à pouvoir lubrifiant caractérisé en ce qu'il est constitué par une matrice polymère solide renfermant, de manière homogène, dans toute sa masse, une dispersion de gouttelettes d'huile liquide à pouvoir lubrifiant, le poids de l'huile liquide représentant entre 20% et 85% du poids total du dit matériau.

Préférentiellement la dite matrice polymère solide est essentiellement constituée par du polystyrène ou par du polyméthacrylate de méthyle et l'huile liquide est essentiellement constituée par un composé siliconé.

L'invention concerne également un procédé d'obtention d'un matériau selon l'invention par préparation dans une première étape d'une émulsion de la dite huile liquide à pouvoir lubrifiant dans une phase liquide d'un monomère liquide polymérisable par polymérisation radicalaire, le dit monomère n'étant pas un solvant de la dite huile liquide, en présence d'un agent tensio-actif et par polymérisation dans une seconde étape de la dite émulsion par addition d'un initiateur chimique de polymérisation radicalaire ou par utilisation d'un rayonnement de type électromagnétique, caractérisé en ce que le dit agent tensio-actif est un copolymère bloc comportant deux motifs biséquencés ou triséquencés, dont un motif est compatible avec la dite huile liquide et dont l'autre motif est compatible avec le dit monomère, le dit agent tensio-actif ayant une masse moléculaire moyenne en nombre comprise entre 500 et 500000.

L'invention concerne enfin des éléments anti-érosifs pour systèmes d'arme à tube, et notamment des disques de calage pour douilles d'artillerie, caractérisés en ce qu'ils sont constitués par un matériau selon l'invention.

L'intérêt du matériau selon l'invention réside dans le fait que, lorsqu'il est soumis à une compression, il fonctionne comme une véritable "éponge humide" en libérant l'huile dont il est chargé de manière contrôlée

et régulière dans toutes les directions de projection. Ainsi un élément anti-érosif en matériau selon l'invention, interposé entre le chargement propulsif et la base du projectile d'une munition pour systèmes d'arme à tube, sera comprimé sous l'effet de la montée en pression au moment de la mise à feu du chargement propulsif et va projeter l'huile liquide à pouvoir lubrifiant de manière régulière sur toute la surface intérieure du tube de l'arme. La matrice solide compactée est quant à elle détruite par les gaz chauds.

L'invention est décrite ci-après de manière détaillée en se référant aux figures 1 à 4.

La figure 1 représente, vue en coupe, une munition comportant un élément anti-érosif selon l'invention dans une première configuration géométrique.

La figure 2 représente, vue en coupe, une munition comportant un élément anti-érosif selon l'invention dans une seconde configuration géométrique.

La figure 3 représente, de manière schématique, un dispositif expérimental destiné à mesurer l'efficacité de la projection d'huile par le matériau selon l'invention.

La figure 4 représente, de manière schématique, un dispositif expérimental destiné à simuler le fonctionnement d'un élément anti-érosif selon l'invention dans un système d'arme à tube.

L'invention concerne donc un matériau composite constitué par une matrice polymère solide renfermant, de manière homogène, dans toute sa masse, une dispersion de gouttelettes d'une huile liquide à pouvoir lubrifiant. Le polymère constituant la matrice solide ne doit pas être soluble dans l'huile liquide. Ce polymère étant obtenu par polymérisation radicalaire d'une émulsion de la dite huile dans un monomère liquide, le dit monomère, précurseur du polymère, ne doit pas, lui non plus, être soluble dans la dite huile liquide. Divers polymères solides peuvent donc convenir du moment qu'ils répondent aux deux conditions qui viennent d'être énoncées. Les polymères de nature vinyliques ou acryliques conviennent bien dans le cadre de la présente invention. Comme polymères préférés on citera le polystyrène et polyméthacrylate de méthyle.

Comme huile liquide on peut utiliser toute huile liquide à pouvoir lubrifiant, naturelle ou de synthèse, qui reste à l'état liquide dans les conditions de stockage des munitions ainsi que dans les conditions d'utilisation dans une arme à grande cadence de tir. L'huile doit donc rester liquide entre –40°C et +250°C au moins et préférentiellement entre –65°C et +300°C. On utilisera avantageusement comme huile une huile essentiellement constituée par un composé siliconé. On préfèrera comme composés siliconés, ceux répondant à la formule générale :

$$\left( \begin{array}{c} R^2 \\ | \\ Si - O \\ | \\ R^1 \end{array} \right)_n$$

dans laquelle :

– $R^1$ et $R^2$, identiques ou différents, représentent le groupe méthyle ou le groupe phényle,

– n est un nombre entier compris entre 10 et 10000 et préférentiellement entre 50 et 1000.

Un matériau composite selon l'invention peut contenir jusqu'à 85% en poids d'huile liquide dispersée et occluse à l'intérieur de la matrice solide. Il faut noter à ce sujet que, si le matériau selon l'invention fonctionne comme une "éponge humide" lorsqu'il est soumis à une compression, ce matériau au repos a l'aspect et la consistance d'un véritable solide, qu'il peut être travaillé ou usiné comme un solide du moment que la taille des gouttelettes d'huile est suffisament fine.

L'invention concerne également un procédé de fabrication du matériau selon l'invention. Ce procédé consiste, dans une première étape, à préparer une émulsion de la dite huile liquide à pouvoir lubrifiant dans une phase liquide continue d'un monomère liquide polymérisable par polymérisation radicalaire. Comme il a déjà été dit plus haut le dit monomère ne doit pas être un solvant de la dite huile liquide et ne doit pas conduire, par polymérisation, à un polymère soluble dans cette dernière. Les monomères à structure vinylique, styrénique, pyridinique, acrylique ou méthacrylique seront avantageusement utilisés. Comme monomères on préfèrera particulièrement le styrène et le méthacrylate de méthyle.

Le dit monomère liquide polymérisable peut être utilisé seul ou en mélange avec un polymère de même nature que la matrice solide finale afin d'améliorer la stabilité de l'émulsion. On peut ainsi ajouter jusqu'à 30% en poids de polymère par rapport au poids de monomère utilisé.

L'émulsion est réalisée par agitation au moyen de tout appareillage connu en présence d'un agent tensio-actif. De manière caractéristique l'agent tensio-actif est un copolymère bloc comportant deux motifs

biséquencés A-B ou triséquencés A-B-A ou B-A-B dont un motif est compatible avec la dite huile liquide et dont l'autre motif est compatible avec le dit monomère liquide. Au sens de la présente invention on entend par "compatibilité" entre deux constituants, le fait pour ces deux constituants d'être miscibles en une phase homogène unique. Le dit agent tensio-actif peut avoir une masse moléculaire moyenne en nombre comprise entre 500 et 500000 et préférentiellement entre 1000 et 200000.

Le dit agent tensio-actif sera avantageusement choisi parmi les copolymères blocs biséquencés ou triséquencés du type : polyoxyéthylène-polydiméthylsiloxane, polyoxypropylène-polydiméthylsiloxane, polyméthacrylate de méthyle-polydiméthylsiloxane, polystyrène-polydiméthylsiloxane, polydiméthylsiloxane-polyoxyéthylène-polyoxypropylène.

De tels copolymères blocs sont par exemple décrits dans la demande de brevet européen 0038979, dans les demandes de brevet français 2 314 932, 2 204 640.

Selon un mode de réalisation préféré de l'invention on choisira une matrice styrénique couplée à des copolymères blocs du type polystyrène-polydiméthylsiloxane, ou une matrice acrylique couplée à des copolymères blocs du type polyoxyéthylène-polydiméthylsiloxane, polyoxypropylène-polydiméthylsiloxane, polydiméthylsiloxane-polyoxyéthylène-polyoxypropylène.

Bien que, selon l'invention, on préfère comme agent tensio-actifs les copolymères blocs, on pourra aussi utiliser comme agents tensio-actifs dans le cadre de la présente invention des copolymères greffés.

L'émulsion peut contenir entre 1 et 20% en poids d'agent tensio-actif par rapport au poids du dit monomère liquide, mais préférentiellement cette quantité sera comprise entre 1 et 10% en poids.

Lorsque l'émulsion d'huile dans le monomère polymérisable est réalisée on provoque dans une deuxième étape la polymérisation de l'émulsion par addition d'un initiateur chimique de polymérisation radicalaire ou par utilisation d'un rayonnement de type électromagnétique susceptible d'amorcer la polymérisation comme par exemple un rayonnement UV, ou un bombardement électronique. L'utilisation d'un rayonnement de type électromagnétique est toutefois limité à des produits de faible épaisseur, principalement de produits en forme de feuilles ou de plaques. Comme initiateur de polymérisation radicalaire on utilisera avantageusement un composé azoïque, un percarbonate ou un peroxyde comme le peroxyde de benzoyle. La quantité d'initiateur de polymérisation sera comprise entre 0,1% et 5% en poids par rapport au poids du dit monomère polymérisable et préférentiellement voisine de 1%.

Enfin, dans certains cas, il est possible d'ajouter à l'émulsion un agent de réticulation comme de divinylbenzène ou le tétrabromure de carbone, de manière à créer des pontages dans les matrices polymères utilisées.

La polymérisation de l'émulsion est en général effectuée à une température comprise entre 20°C et 150°C, en fonction du moyen d'amorçage utilisé. La durée de polymérisation peut être comprise entre 2 et 120 heures en cas de polymérisation utilisant un initiateur chimique, ou de l'ordre de la minute en cas de polymérisation utilisant un rayonnement de type électromagnétique.

L'émulsion pouvant contenir jusqu'à 85% en poids, par rapport à son poids total, d'huile liquide, le procédé permet ainsi d'obtenir des matériaux à matrice polymère solide contenant entre 20% et 85% d'huile liquide par rapport à leur poids total.

Plus l'émulsion sera fine et plus l'huile liquide sera finement répartie dans la matrice polymère solide, condition qui sera d'autant mieux obtenue que la concentration en agent tensio-actif dans l'émulsion sera plus élevée et que la masse moléculaire de l'agent tensio-actif sera plus faible.

L'invention concerne enfin l'application des matériaux qui viennent d'être décrits à la réalisation d'éléments anti-érosifs pour munitions destinées aux systèmes d'arme à tube. Ces éléments peuvent avoir les configurations géométriques habituellement adoptées pour les éléments anti-érosifs déjà connus.

On a représenté à la figure 1, vue en coupe une munition équipée d'un tel élément. On reconnait sur cette figure un corps de douille 1 avec un culot 2 serti à l'une de ses extrémités. Le culot 2 porte une amorce 3. L'extrémité du corps de douille 1 opposée au culot 2 porte un rétreint 4 dans lequel est serti un projectile 5. Le corps de douille 1 est chargé avec un chargement 6 de poudre propulsive. La surface intérieure du corps de douille 1 est entourée dans sa partie proche du projectile 5 par un élément anti-érosif 7, en forme de manchon, constitué par un matériau composite à pouvoir lubrifiant selon l'invention.

On a représenté à la figure 2, vue en coupe, une réalisation préférée de l'invention. Cette réalisation concerne une munition, analogue à celle représentée à la figure 1, dans laquelle l'élément anti-érosif a la forme d'un disque de calage 8 interposé entre le chargement propulsif 6 et la base du projectile 5.

Comme il a déjà été dit plus haut, au moment de la mise à feu l'élément anti-érosif 7 ou 8 va se trouver comprimé et expulsé à la suite du projectile 5 par les gaz chauds générés par la combustion du chargement 6 et va projeter dans toutes les directions l'huile qu'il contient contre la surface intérieure du tube de l'arme, ce qui va contribuer à abaisser la température de cette dernière grâce à la décomposition endothermique de l'huile et limitera ainsi sa corrosion de nature chimique.

Les exemples qui suivent illustrent certaines possibilités de mise en oeuvre de l'invention sans en limiter la portée.

Les essais ont été effectués avec deux huiles silicones différentes :

huile A : polyméthyl, phényl siloxane : huile de viscosité 710 centipoises (cps) soit 0,710 Pa.s

huile B : polydiméthyl siloxane : huile de viscosité 1000 cps soit 1 Pa.s

Exemple 1

On a essayé dans cet exemple de fabriquer un matériau composite à pouvoir lubrifiant sans utiliser d'agent tensio-actif.

A 18 g d'huile A on ajoute 12 g de styrène monomère et 0,12 g de peroxyde de benzoyle (soit 1% en masse par rapport au monomère).

Le mélange est homogénéïsé par agitation avec un agitateur à turbine centrifuge tournant à 4 500 tours par minute durant 5 minutes.

La polymérisation est ensuite assurée sans agitation dans une étuve régulée à 80°C durant 24 heures.

On obtient ainsi un matériau compact, au toucher gras, présentant des alvéoles sphériques de dimensions variant entre 20 et 50 microns (micromètres) et contenant 58% en masse d'huile silicone.

Exemple 2

On recommence l'expérimentation de l'exemple 1 mais cette fois en présence d'un agent tensio-actif.

A 18 g d'huile A sont ajoutés 11,5 g de styrène monomère, 0,12 g de peroxyde de benzoyle et 0,30 g d'un copolymère bloc polystyrène-polydiméthylsiloxane. Ce copolymère biséquencé est caractérisé par une masse moléculaire moyenne en nombre de 56000 pour sa séquence polystyrène et de 50000 pour sa séquence polydiméthylsiloxane.

L'émulsion est réalisée par agitation durant 5 minutes à l'aide d'un agitateur à turbine centrifuge tournant à 4 500 tours par minute.

La polymérisation du système est conduite dans les mêmes conditions que celles de l'exemple 1.

On obtient ainsi un matériau compact, plus rigide et plus sec que le matériau de l'exemple 1. L'utilisation du tensio-actif entraine une régularité plus grande de la taille des alvéoles qui contiennent 60% d'huile silicone et dont les dimensions sont comprises entre 5 et 25 microns (micromètres).

Exemple 3

A 70 g d'huile A sont ajoutés 26,7 g de styrène monomère, 0,3 g de peroxyde de benzoyle, 1,5 g de divinyl benzène et 1,5 g d'un copolymère bloc polystyrène-polydiméthylsiloxane comme agent tensio-actif. Ce copolymère biséquencé est caractérisé par une masse moléculaire moyenne en nombre de 14000 pour la séquence polystyrène et de 37 500 pour la séquence polydiméthylsiloxane.

L'émulsion est réalisée par agitation durant 5 minutes à l'aide d'un agitateur à turbine centrifuge tournant à 5000 tours par minute.

La polymérisation est conduite à 80°C durant 24 heures sans agitation.

On obtient ainsi un matériau compact renfermant 70% en masse d'huile contenue dans des alvéoles dont la taille est comprise entre 10 et 30 microns (micromètres).

L'addition de divinyl benzène permet l'obtention d'un réseau polymère, ce qui multiplie par deux la résistance à la rupture du matériau à 20°C par rapport à celle du matériau obtenu à l'exemple 2.

Exemple 4

A 70 g d'huile B sont ajoutés 26,7 g de styrène monomère, 0,3 g de peroxyde de benzoyle, 1,5 g de divinyl benzène et 1,5 g de copolymère bloc polystyrène-polydiméthylsiloxane comme agent tensio-actif. Ce copolymère biséquencé est défini par une masse moléculaire moyenne en nombre de 5 250 pour la séquence polystyrène et de 10000 pour la séquence polydiméthylsiloxane.

Les conditions de réalisation de l'émulsion et de conduite de la polymérisation sont analogues à celles de l'exemple 3.

On obtient ainsi un matériau compact renfermant 70% en masse d'huile B dans une matrice polystyrène réticulée par le divinyl benzène. La taille des alvéoles contenant l'huile est comprise entre 10 et 35 microns (micromètres).

Exemple 5

A 50 g d'huile B sont ajoutés 28,2 g de méthacrylate de méthyle, 0,3 g de peroxyde de benzoyle, 1,5 g de copolymère bloc biséquencé polydiméthylsiloxane-polyoxyalkylène comme agent tensio-actif. La séquence polyoxyalkylène étant elle-même constituée par une séquence polyoxyéthylène suivie d'une séquence polyoxypropylène.

Ce copolymère est défini par une masse moléculaire moyenne en nombre de 7 500, à raison de 21% en nombre pour la séquence polydiméthylsiloxane, 21% en nombre pour la séquence polyoxyéthylène et 58% en nombre pour la séquence polyoxypropylène.

L'émulsion est réalisée par agitation pendant 6 minutes à l'aide d'un agitateur à turbine centrifuge tournant à 5000 tours par minute. Cette émulsion est ensuite polymérisée à 60°C pendant 48 heures sans agitation.

On obtient ainsi un bloc très dur et homogène renfermant en masse 62% d'huile silicone dans des alvéoles sphériques dont la taille est comprise entre 15 et 45 microns (micromètres).

Exemple 6

Le matériau obtenu à l'exemple 3 et renfermant 70% en masse huile A a été testé dans un dispositif de compression dynamique représenté de manière schématique à la figure 3.

Dans une enceinte manométrique 11 est disposée une enclume 12 au fond de laquelle est placé un échantillon 13 du matériau à tester. Un piston 14 mobile à l'intérieur d'une bague de positionnement 15 peut venir appuyer sur l'échantillon 13.

Une quantité du poudre propulsive 16 est placée à l'intérieur de l'enceinte manométrique. Cette quantité de poudre est celle nécessaire pour obtenir une pression de 100 MPa à l'intérieur de l'enceinte 11.

Après essai, le résidu solide provenant de l'échantillon 13 ne pèse plus que 35% de son poids initial. Les 65% manquant, représentent le poids de l'huile A libérée lors de la compression dynamique.

Exemple 7

Dans le dispositif représenté de manière schématique à la figure 4 on a testé le matériau obtenu dans l'exemple 4 qui renferme 70% en masse d'huile B.

Le dispositif utilisé est destiné à simuler un tir dans un système d'arme à tube. Il se compose d'une enceinte manométrique 21 prolongée par une chambre 22 qui débouche sur un tube 23 communiquant avec une enceinte de décompression 24 obturée, en début d'essai, par un opercule 25 calibré à 280 MPa. Un thermocouple 26 disposé à 0,2 mm de la surface intérieure du tube 23 permet d'accéder à la température de surface interne du tube 23. Une bague 27 en matériau à tester est disposée dans la chambre 22 de manière à permettre une communication directe entre le tube 23 et l'enceinte 21. Une quantité de poudre propulsive 28 est disposée à l'intérieur de l'enceinte 21. Cette quantité est celle nécessaire pour obtenir une pression légèrement supérieure à 280 MPa dans l'enceinte 21 et le tube 23.

On a effectué un essai avec de la poudre seule sans bague 27 et un essai avec de la poudre et une bague 27.

La combustion de la poudre 28 dans l'enceinte 21 conduit à une montée en pression jusqu'à 280 MPa, pression à laquelle l'opercule cède provoquant le passage des gaz chauds sur la bague 27. On enregistre l'évolution de la température indiquée par le thermocouple dans le temps et on calcule l'impulsion thermique transmise (quantité de chaleur fournie par unité de surface).

Les résultats ont été les suivants :

| | Température maximum (°C) | Impulsion thermique (Joule/$cm^2$) |
|---|---|---|
| Poudre seule | 25,6 | 4,37 |
| Poudre avec bague 27 | 22,6 | 3,17 |

On observe un abaissement de l'impulsion thermique transmise de 27% dans le cas d'un tir en présence d'une bague anti-érosive selon l'invention et ce pour une perte de masse de la bague de 43,6%. Par ailleurs des mesures effectuées en différents points du tube 23 montrent en tous ces points un abaissement de l'impulsion thermique transmise, ce qui démontre que la projection d'huile sur la surface intérieure du tube se fait bien de manière régulière dans toutes les directions de projection.

## Revendications

1. Matériau composite à pouvoir lubrifiant caractérisé en ce qu'il est constitué par une matrice polymère solide renfermant de manière homogène, dans toute sa masse, une dispersion de gouttelettes d'huile liquide à pouvoir lubrifiant, le poids de l'huile liquide représentant entre 20% et 85% du poids total du dit matériau.

2 . Matériau selon la revendication 1 caractérisé en ce que la dite matrice polymère solide est essentiellement constituée par du polystyrène ou par du polyméthacrylate de méthyle.

3. Matériau selon l'une quelconque des revendications 1 ou 2 caractérisé en ce que la dite huile liquide est essentiellement constituée par un composé siliconé.

4. Matériau selon la revendication 3 caractérisé en ce que le dit composé siliconé est de formule générale :

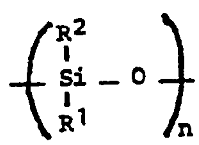

dans laquelle :

– $R^1$ et $R^2$, identiques ou différents, représentent le groupe méthyle ou le groupe phényle,

– n est un nombre entier compris entre 10 et 10000.

5. Procédé de fabrication d'un matériau selon l'une quelconque des revendications 1 à 4 par préparation dans une première étape d'une émulsion de la dite huile liquide à pouvoir lubrifiant dans une phase liquide d'un monomère polymérisable par polymérisation radicalaire, le dit monomère n'étant pas un solvant de la dite huile liquide, en présence d'agent tensio-actif et par polymérisation dans une seconde étape de la dite émulsion par addition d'un initiateur chimique de polymérisation radicalaire ou par utilisation d'un rayonnement de type électromagnétique, caractérisé en ce que le dit agent tensio-actif est un copolymère bloc comportant deux motifs biséquencés ou triséquencés, dont un motif est compatible avec la dite huile liquide et dont l'autre motif est compatible avec le dit monomère, le dit agent tensio-actif ayant une masse moléculaire moyenne en nombre comprise entre 500 et 500000.

6. Procédé selon la revendication 5 caractérisé en ce que la dite émulsion contient entre 1 et 20% en poids d'agent tensio-actif par rapport au poids dudit monomère liquide.

7. Procédé selon la revendication 6 caractérisé en ce que le dit agent tensio-actif est choisi dans le groupe des copolymères blocs biséquencés ou triséquencés : polyoxyéthylène-polydiméthylsiloxane,

polyoxypropylène-polydiméthylsiloxane, polyméthacrylate de méthyle-polydiméthylsiloxane, polydiméthylsiloxane-polyoxyéthylène-polyoxypropylène.

8. Elément anti-érosif pour système d'arme à tube caractérisé en ce qu'il est constitué par un matériau selon l'une quelconque des revendications 1 à 4.

9. Elément anti-érosif selon la revendication 8 caractérisé en ce qu'il s'agit d'un disque (8) de calage pour douilles (1) destinées aux munitions d'artillerie.

## Ansprüche

1. Verbundmaterial mit Schmiervermögen, dadurch gekennzeichnet, daß es aus einer festen polymeren Matrix besteht, die eine über ihre gesamte Masse homogen verteilte Dispersion von Tröpfchen eines flüssigen Öls mit Schmiervermögen enthält, wobei der Gewichtsanteil des flüssigen Öls 20 bis 85% des Gesamtgewichts des Verbundmaterials beträgt.

2. Verbundmaterial nach Anspruch 1, dadurch gekennzeichnet, daß die feste polymere Matrix im wesentlichen aus Polystyrol oder Polymethylmethacrylat besteht.

3. Verbundmaterial nach Anspruch 1 oder 2, dadurch gekennzeichnet, daß das flüssige Öl im wesentlichen aus einer Siliconverbindung besteht.

4. Verbundmaterial nach Anspruch 3, dadurch gekennzeichnet, daß die Siliconverbindung die allgemeine Formel

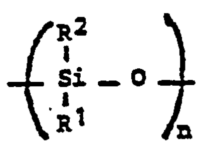

besitzt, in der bedeuten : $R^1$ und $R^2$, die gleich oder verschieden sein können, Methyl oder Phenyl und n eine ganze Zahl von 10 bis 10000.

5. Verfahren zur Herstellung der Verbundmaterialien nach einem der Ansprüche 1 bis 4 durch Herstellung einer Emulsion des flüssigen Öls mit Schmiervermögen in einer flüssigen Phase eines radikalisch polymerisierbaren Monomers, das kein Lösungsmittel für das flüssige Öl darstellt, in Gegenwart eines grenzflächenaktiven Mittels in einer ersten Stufe und Polymerisation der Emulsion durch Zusatz eines chemischen Initiators der radikalischen Polymerisation oder Anwendung elektromagnetischer Strahlung in einer zweiten Stufe, dadurch gekennzeichnet, daß das grenzflächenaktive Mittel ein Blockcopolymer ist, das zwei binäre oder ternäre Sequenzen aufweist, von denen eine mit dem flüssigen Öl und die andere mit dem Monomer kompatibel ist, und eine mittlere Molekülmasse von 500 bis 500.000 aufweist.

6. Verfahren nach Anspruch 5, dadurch gekennzeichnet, daß die Emulsion 1 bis 20 Gew.-% grenzflächenaktives Mittel, bezogen auf das Gewicht des flüssigen Monomers, enthält.

7. Verfahren nach Anspruch 6, dadurch gekennzeichnet, daß das grenzflächenaktive Mittel unter folgenden binären oder ternären Blockcopolymeren ausgewählt ist: Polyoxyethylen-Polydimethylsiloxan, Polyoxypropylen-Polydimethylsiloxan, Polymethylmethacrylat-Polydimethylsiloxan, Polydimethylsiloxan-Polyoxyethylen-Polyoxypropylen.

8. Antierosives Element für Rohrwaffensysteme, dadurch gekennzeichnet, daß es aus einem Verbundmaterial nach einem der Ansprüche 1 bis 4 besteht.

9. Antierosives Element nach Anspruch 8, dadurch gekennzeichnet, daß es sich um eine Zwischenscheibe (8) für Patronenhülsen (1) handelt, die für Artilleriemunition vorgesehen sind.

## Claims

1. Composite material with lubricating properties, characterized in that it consists of a solid polymeric matrix containing, in a homogeneous manner, throughout its mass, a dispersion of liquid oil droplets with lubricating properties, the weight of the liquid oil representing between 20% and 85% of the total weight of the said material.

2. Material according to Claim 1, characterized in that the said solid polymeric matrix consists essentially of polystyrene or of polymethyl methacrylate.

3. Material according to either of Claims 1 or 2, characterized in that the said liquid oil consists essentially of a silicone compound.

4. Material according to Claim 3, characterized in that the said silicone compound is of general formula:

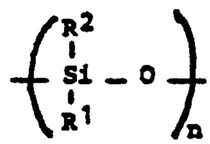

in which :

– $R^1$ and $R^2$, which are identical or different, denote the methyl group or the phenyl group, and

– n is an integer between 10 and 10,000.

5. Process for the manufacture of a material according to any one of Claims 1 to 4 by preparing, in a first step, an emulsion of the said liquid oil with lubricating properties in a liquid phase of a monomer capable of being polymerized by radical polymerization, the said monomer not being a solvent for the said liquid oil, in the presence of a surface-active agent and by polymerization, in a second step, of the said emulsion by addition of a chemical initiator of radical polymerization or by use of a radiation of electromagnetic type, characterized in that the said surface-active agent is a block copolymer containing two-block or three-block repeat units, in which one repeat unit is compatible with the said liquid oil and in which the other repeat unit is compatible with the said monomer, the said surface-active agent having a number-average molecular mass of between 500 and 500,000.

6. Process according to Claim 5, characterized in that the said emulsion contains between 1 and 20% by weight of surface-active agent relative to the weight of the said liquid monomer.

7. Process according to Claim 6, characterized in that the said surface-active agent is chosen from the group of the two-block or three-block block copolymers : polyoxyethylene-polydimethylsiloxane, polyoxypropylenepolydimethylsiloxane, polymethyl methacrylate-polydimethylsiloxane, and polydimethylsiloxane-polyoxyethylene-polyoxypropylene.

8. Antierosive component for a barrel weapon system, characterized in that it consists of a material according to any one of Claims 1 to 4.

9. Antierosive component according to Claim 8, characterized in that it is a wad (8) for shells (1) intended for artillery ammunition.

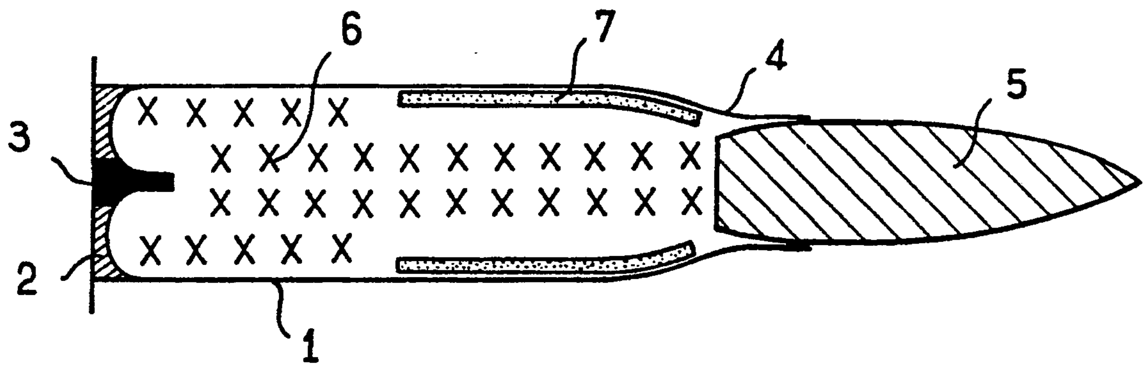


FIG_1

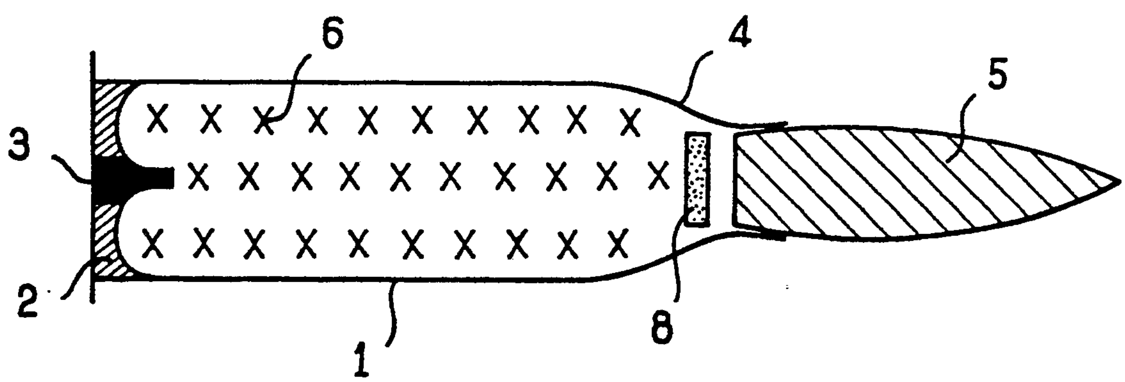


FIG_2

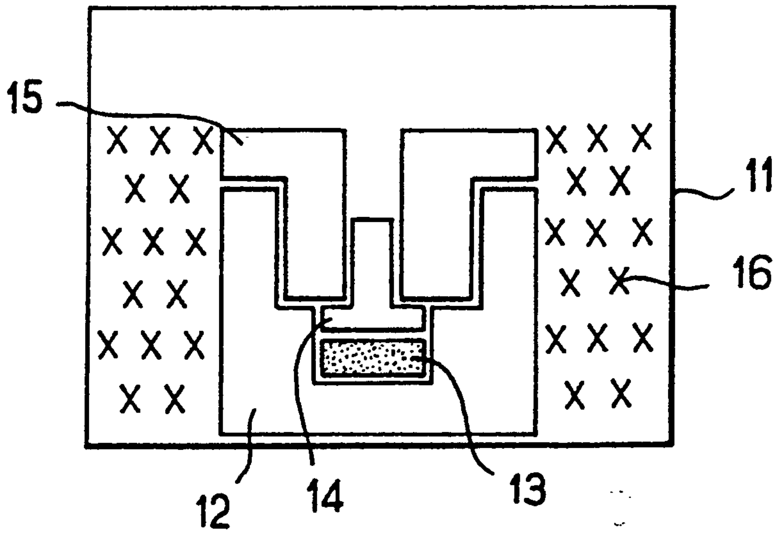


FIG_3

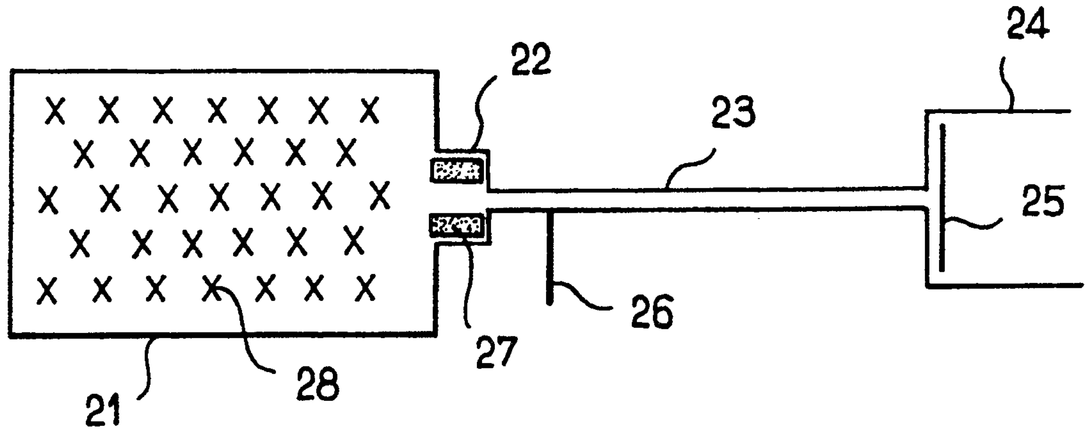


FIG_4